# FASCICULE DE BREVET EUROPEEN

(11) **EP 0 605 263 B1**
(45) Date de publication et mention de la délivrance du brevet: **22.05.1996**
(21) Numéro de dépôt: 93402824.2
(22) Date de dépôt: 19.11.1993
(51) Int. Cl.: G21C 17/017, G21C 17/003

(54) **Dispositif et procédé de contrôle de la surface intérieure d'une pièce tubulaire**
Vorrichtung und Verfahren zur Überprüfung der Innenfläche eines rohrförmigen Komponentenstücks
Apparatus and method for inspecting the interior surface of a tubular component part

(30) Priorité: 28.12.1992 FR 9215788
(43) Date de publication de la demande: 06.07.1994
(73) Titulaire: FRAMATOME, F-92400 Courbevoie (FR)
(72) Inventeur: Magnin, Bernard, F-42630 Saint Victor Sur Rhone (FR); Lara, Joseph, F-69250 Montanay (FR)
(74) Mandataire: Bouget, Lucien

(56) Documents cités:
- EP-A- 0 039 922
- EP-A- 0 411 874
- FR-A- 2 186 709
- FR-A- 2 336 681
- GB-A- 2 012 959

## Description

L'invention concerne un dispositif et un procédé de contrôle de la surface interne d'une pièce tubulaire et en particulier d'une pièce tubulaire de traversée du couvercle de la cuve d'un réacteur nucléaire refroidi par de l'eau sous pression.

Les réacteurs nucléaires à eau sous pression comportent généralement une cuve renfermant le coeur du réacteur qui est plongé dans l'eau sous pression de refroidissement du coeur du réacteur.

La cuve du réacteur, de forme générale cylindrique, comporte un couvercle de forme hémisphérique qui peut être rapporté sur sa partie supérieure. Le couvercle est percé d'ouvertures au niveau de chacune desquelles est fixée par soudure, une pièce tubulaire de traversée constituant un adaptateur assurant le passage et la commande de déplacement d'un prolongateur d'une grappe de contrôle de la réactivité du coeur ou un passage de traversée d'un moyen de mesure à l'intérieur du coeur, tel qu'une colonne de thermocouple.

Sur les parties d'extrémité de chacun des adaptateurs, sont fixés les mécanismes de commande de déplacement des grappes de contrôle de la réactivité du coeur.

A l'intérieur de chacune des traversées tubulaires du couvercle de cuve, est fixée, dans une position coaxiale par rapport à la pièce tubulaire de traversée et avec un certain jeu radial, une manchette thermique qui comporte une partie élargie diamétralement venant reposer sur une portée d'appui élargie diamétralement située à la partie supérieure de l'alésage de la pièce tubulaire de traversée et qui est montée libre en rotation à l'intérieur de la traversée.

Les prolongateurs des barres de commande de la réactivité du réacteur nucléaire traversent le couvercle de cuve, à l'intérieur des manchettes thermiques qui sont elles-même disposées coaxialement à l'intérieur des adaptateurs des barres de commande ou plus généralement à l'intérieur des pièces tubulaires de traversée du couvercle.

De manière à accroître la fiabilité et la sûreté de fonctionnement des réacteurs nucléaires et pour prolonger la durée de vie de ces réacteurs, les exploitants sont amenés à effectuer des contrôles de plus en plus nombreux des différents éléments constituant le réacteur nucléaire.

En particulier, il peut être nécessaire de contrôler l'état des pièces de traversée du couvercle de la cuve, pour s'assurer de l'intégrité de ces pièces, après un certain temps de fonctionnement du réacteur, en particulier dans la zone où ces pièces tubulaires sont soudées sur le couvercle de cuve.

Ces contrôles qui doivent permettre de déceler et de réparer des défauts sur la surface interne de la pièce tubulaire de traversée, doivent être effectués par l'intérieur de l'alésage de la pièce tubulaire et peuvent nécessiter en conséquence un démontage de la manchette thermique pour accèder à la surface intérieure de l'alésage de la traversée.

Les contrôles et réparations sont effectués lors d'un arrêt du réacteur nucléaire, le couvercle de la cuve étant démonté et placé au niveau d'un stand d'intervention.

Le démontage de la manchette thermique nécessite des opérations complexes, dans la mesure où l'élargissement de la manchette thermique reposant sur une portée d'appui disposée à la partie supérieure de l'adaptateur interdit un démontage de la manchette par traction vers le bas, sur sa partie inférieure accessible en-dessous du couvercle.

En outre, il n'est pas possible non plus de démonter la manchette par traction vers le haut, dans la mesure où les mécanismes de commande de grappes qui sont fixés par vissage et par soudage sur les parties supérieures des adaptateurs interdisent le passage de la manchette thermique.

Il est donc souhaitable de limiter les opérations de démontage complexes des manchettes thermiques aux adaptateurs présentant effectivement des défauts nécessitant des réparations.

Les opérations de contrôle des pièces de traversée par l'intérieur de leur alésage peuvent être effectuées de manière efficace en utilisant des sondes de contrôle telles que des sondes à ultrasons ou des sondes à courants de Foucault, dans la mesure où ces sondes peuvent être placées en vis-à-vis ou au contact de la surface intérieure de l'alésage de la pièce de traversée.

On a proposé, dans la demande de brevet EP-A-0 558 371de réaliser au moins une fente traversant la paroi de la manchette dans une direction longitudinale, par usinage par l'intérieur de la manchette, et d'introduire une sonde de contrôle dans la manchette, de manière à placer cette sonde au niveau de la fente et à réaliser le contrôle par déplacement de la manchette thermique en rotation autour de son axe à l'intérieur de la pièce tubulaire et par déplacement en translation de la sonde suivant la longueur de la fente.

On a également proposé de réaliser la réparation de la pièce tubulaire telle qu'un adaptateur dans le cas où des défauts sont décelés, à travers la fente réalisée dans la manchette.

Un tel procédé présente de nombreux avantages par rapport au procédé nécessitant le démontage de la manchette thermique mais il reste néanmoins nécessaire d'effectuer un usinage de la manchette, pour réaliser la fente.

Le but de l'invention est donc de proposer un dispositif de contrôle de la surface intérieure d'une pièce tubulaire de traversée du couvercle de la cuve d'un réacteur nucléaire refroidi par de l'eau sous pression, fixée par une soudure sur le couvercle de la cuve, à l'intérieur de laquelle une manchette thermique est montée dans une disposition coaxiale avec un jeu radial, la pièce tubulaire comportant une partie d'extrémité inférieure saillante en-dessous du couvercle placé en position de contrôle après démontage et la manchette thermique présentant une partie d'extrémité saillante par rapport à la partie d'extrémité inférieure de la pièce tubulaire, ce dispositif permettant de réaliser le contrôle sans avoir à démonter la manchette thermique et sans usinage préalable de cette manchette.

Dans ce but, le dispositif suivant l'invention comporte :
- un premier support de forme tubulaire portant sur sa surface externe des moyens de fixation à un outil de manutention assurant un déplacement dans une direction quelconque de l'espace,
- un second support de forme tubulaire dont le diamètre intérieur est supérieur au diamètre de la partie saillante de la manchette thermique monté en position coaxiale et rotatif autour de son axe à l'intérieur du premier support,
- au moins trois bras montés pivotants sur le second support autour d'un axe d'articulation perpendiculaire à l'axe du second support portant des moyens de roulement,
- des moyens moteurs de mise en rotation du second support autour de son axe,
- une lame souple portant une sonde de contrôle à l'une de ses extrémités,
- des moyens de support et de guidage de la lame souple portés par le second support, disposés et fixés sur le second support dans une direction sensiblement parallèle à son axe, comportant une partie d'extrémité montée pivotante autour d'un axe perpendiculaire à l'axe du second support,
- des moyens de déplacement de la lame en translation suivant la direction axiale des moyens de guidage,
- des moyens de déplacement des bras pivotants,
- des moyens de rabattement de la partie d'extrémité des moyens de guidage de la lame souple en position de service,
- et des moyens de commande de déplacement en rotation du second support et de déplacement en translation de la lame souple,
l'outil de manutention permettant de mettre le dispositif dans une position de service dans laquelle le second support entoure l'extrémité inférieure de la pièce tubulaire.

Afin de bien faire comprendre l'invention, on va maintenant décrire, à titre d'exemple non limitatif, en se référant aux figures jointes en annexe, un mode de réalisation d'un dispositif suivant l'invention et sa mise en oeuvre pour réaliser le contrôle d'un adaptateur de traversée de la cuve d'un réacteur nucléaire à eau sous pression.

La figure 1 est une vue en coupe par un plan axial d'un adaptateur de traversée du couvercle de la cuve d'un réacteur nucléaire à eau sous pression.

Les figures 2A et 2B sont les parties respectivement gauche et droite de la coupe, suivant 2-2 de la figure 3, montrant le dispositif suivant l'invention en position de service sous la partie inférieure d'un adaptateur tel que représenté sur la figure 1.

La figure 3 est une vue de dessus suivant 3-3 de la figure 2B.

La figure 4 est une vue en élévation suivant 4 de la figure 6, montrant le moyen de guidage et de déplacement de la lame souple du dispositif.

La figure 4A est une vue en coupe suivant A-A de la figure 4.

La figure 4B est une vue en coupe suivant B-B de la figure 4.

La figure 5 est une vue latérale en élévation suivant 5 de la figure 4.

La figure 5A est une vue en coupe suivant A-A de la figure 5.

La figure 6 est une vue en coupe des moyens de guidage et de déplacement représentés sur la figure 5, dans une seconde position fonctionnelle.

La figure 7 est une vue en plan de l'extrémité de la lame souple sur laquelle est fixée la sonde de mesure.

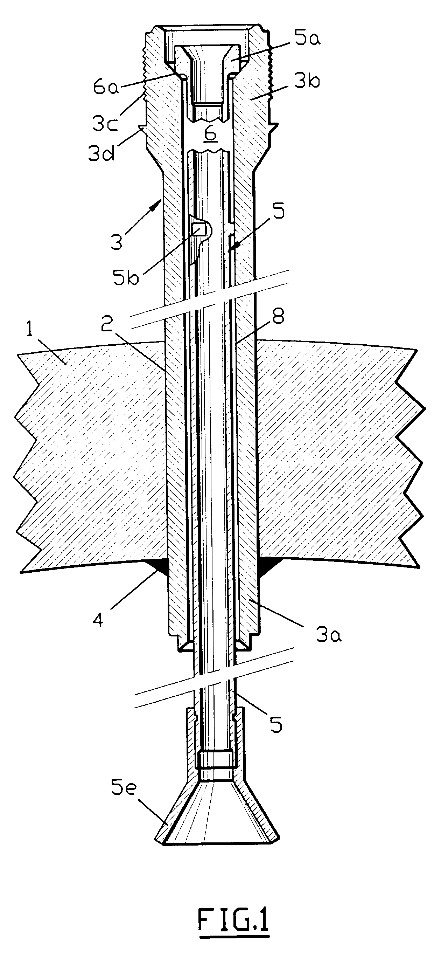

Sur la figure 1, on voit une partie d'un couvercle 1 d'une cuve d'un réacteur nucléaire à eau sous pression qui est traversé par une ouverture 2 à l'intérieur de laquelle est fixée une pièce tubulaire 3 constituant un adaptateur permettant le passage d'un prolongateur assurant le déplacement d'une grappe de contrôle à l'intérieur de la cuve d'un réacteur nucléaire.

L'adaptateur 3 de forme tubulaire comporte une partie courante 3a dont le diamètre correspond au diamètre de l'ouverture 2 et qui est fixée par un cordon de soudure annulaire 4 sur la face interne inférieure du couvercle 1, de manière à se trouver saillante par rapport à cette face interne inférieure. L'adaptateur 3 comporte une partie supérieure élargie diamétralement 3b située à l'extérieur et au-dessus du couvercle de la cuve 1.

Une manchette thermique 5 de forme tubulaire est disposée coaxialement à l'intérieur de l'alésage interne de l'adaptateur 3.

La manchette thermique 5 comporte une partie supérieure 5a élargie diamétralement venant reposer sur une surface d'appui 6a de forme tronconique constituant la partie supérieure de l'alésage interne 6 de l'adaptateur tubulaire 3.

La manchette 5 comporte de plus sur sa surface externe au moins un ensemble de trois plots 5b en saillie radiale vers l'extérieur, disposés à 120° les uns des autres par rapport à l'axe de la manchette 5 et venant en appui contre la surface intérieure de l'alésage interne 6 de l'adaptateur 3, lorsque la manchette 5 est montée à l'intérieur de l'adaptateur.

La manchette 5 présente un diamètre externe sensiblement inférieur au diamètre intérieur de l'alésage 6, de sorte qu'il subsiste un espace annulaire 8 de largeur constante entre la surface externe de la manchette 5 maintenue dans une disposition parfaitement coaxiale à l'alésage 6 par les plots 5b et la surface interne de l'alésage 6.

Dans certains cas, la partie inférieure de l'alésage de l'adaptateur présente une forme tronconique et se raccorde à une partie cylindrique supérieure.

La partie supérieure élargie diamétralement 3b de l'adaptateur 3 comporte sur sa surface externe un filetage 3c et une lèvre 3d en saillie par rapport à la surface externe de la partie 3b.

Le mécanisme de commande de l'adaptateur 3 permettant le déplacement du prolongateur et de la grappe de commande traversant le couvercle à l'intérieur de l'adaptateur est fixé sur la partie supérieure de l'adaptateur 3 par vissage sur la partie filetée 3c et mis en appui sur la lèvre 3d.

La fixation du mécanisme de commande est complétée par un cordon de soudure d'étanchéité assurant la jonction entre le mécanisme et l'adaptateur le long de la lèvre 3d.

La manchette thermique 5 est solidaire à sa partie inférieure, en-dessous du couvercle de cuve et de la partie inférieure de l'adaptateur 3, d'un cône de centrage 5e permettant, lors de la pose du couvercle 1 sur la cuve du réacteur, le centrage des extrémités des tiges de commande de grappes constituant des prolongateurs de ces grappes engagés dans la direction verticale à l'intérieur du coeur du réacteur disposé dans la cuve.

Après un certain temps de fonctionnement du réacteur, il est souhaitable de vérifier l'état des adaptateurs traversant le couvercle de cuve et en particulier de la partie des adaptateurs au niveau de laquelle est réalisée la fixation sur le couvercle de cuve, par l'intermédiaire d'une soudure annulaire telle que 4.

Ce contrôle visant essentiellement la surface interne de l'alésage 6 de l'adaptateur dans la zone de soudure 4 peut être réalisé en déplaçant une sonde, telle qu'une sonde à courants de Foucault suivant la surface intérieure de l'alésage 6 de l'adaptateur.

Le dispositif suivant l'invention qui sera décrit ci-dessous permet de réaliser le contrôle par balayage de la surface intérieure de l'adaptateur sans avoir à démonter préalablement la manchette thermique 5.

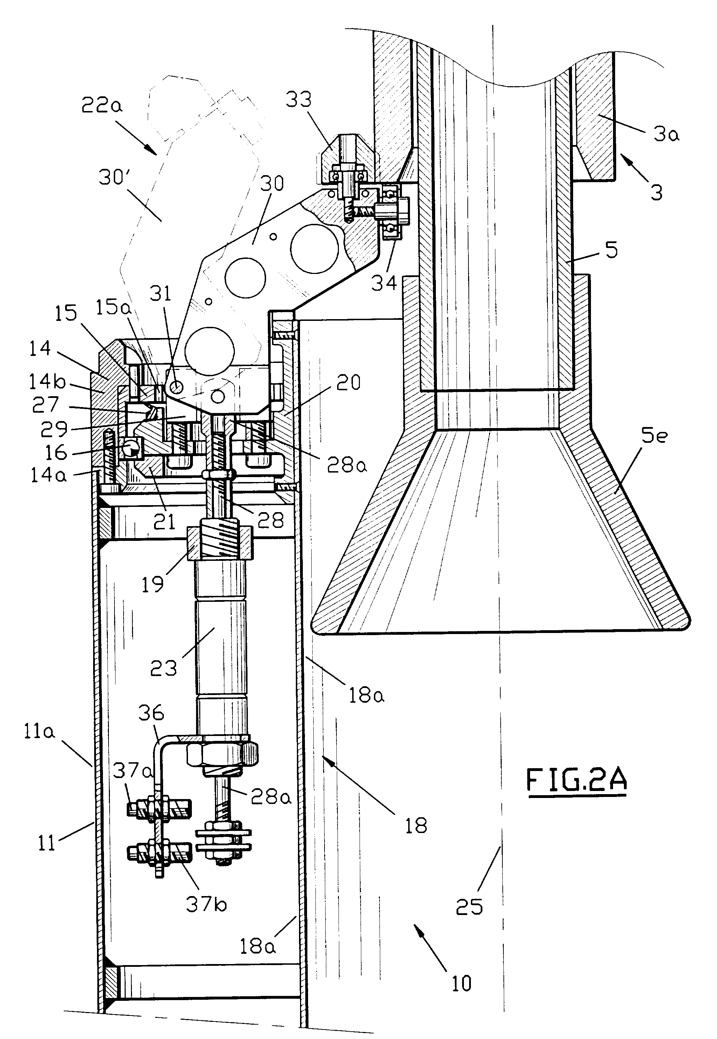

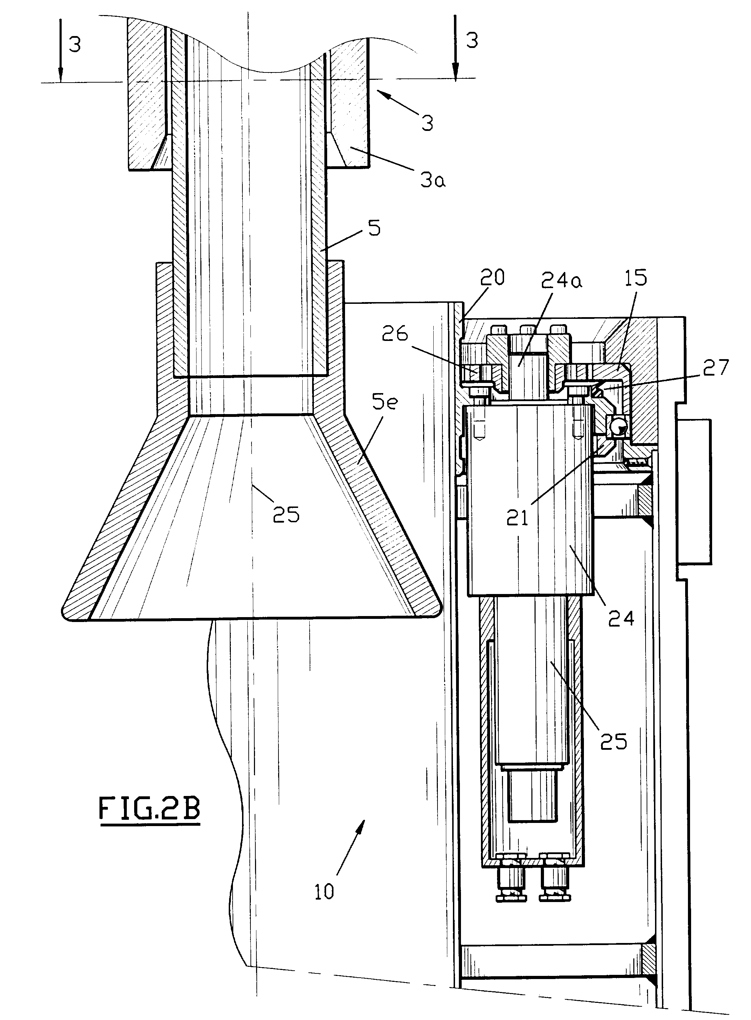

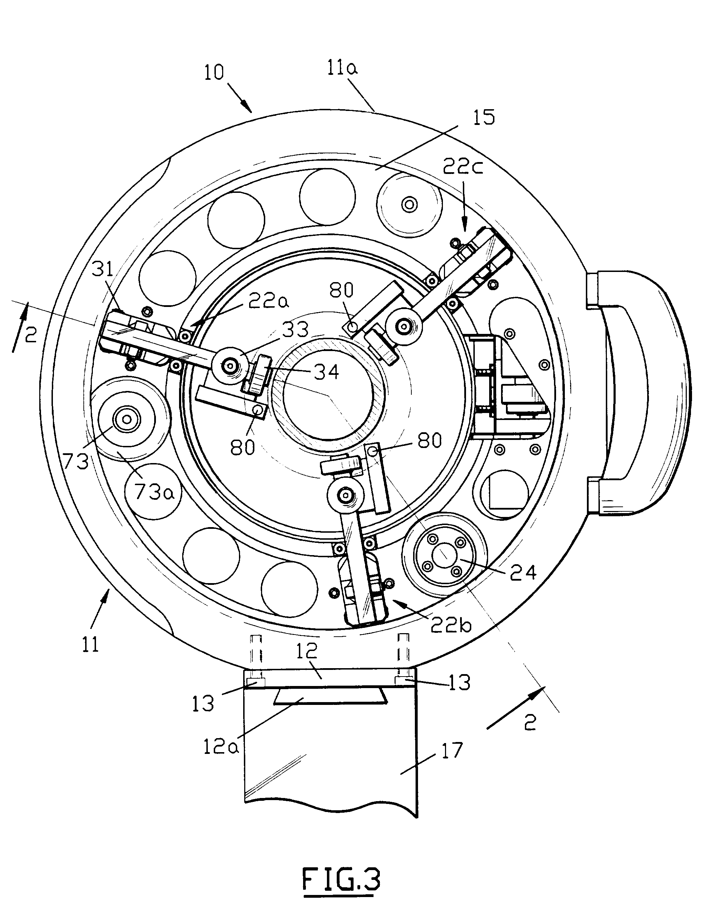

Sur les figures 2A, 2B et 3, on a représenté l'ensemble du dispositif de contrôle suivant l'invention désigné de manière générale par le repère 10.

Le dispositif comporte un premier support 11 de forme annulaire constitué principalement par une virole 11a sur la surface latérale de laquelle un ensemble d'accrochage12 est fixé par des vis 13. L'ensemble d'accrochage 12 comportant une partie 12a en forme de queue d'aronde permet d'assurer la fixation du dispositif de contrôle 10 suivant l'invention à l'extrémité d'un bras de manutention 17 par l'intermédiaire duquel le dispositif 10 peut être déplacé dans une direction quelconque de l'espace.

L'outil de manutention 17 du dispositif de contrôle 10 peut être constitué par un bras anthropomorphique tel que le bras Aramis conçu et développé par la Société BABCOCK et WILCOX NUCLEAR SERVICES.

Le contrôle de la surface intérieure d'un adaptateur 3 tel que représenté sur les figures 1, 2A et 2B est effectué après démontage du couvercle 1 de la cuve du réacteur nucléaire et dépose du couvercle sur un stand d'intervention comportant des parois latérales permettant d'isoler la surface inférieure du couvercle de cuve sous laquelle la partie 3a de l'adaptateur et la partie inférieure de la manchette thermique 5 se trouvent en saillie. La paroi latérale du stand d'intervention comporte une ouverture par laquelle est introduit le bras de manutention monté sur un support mobile.

Le dispositif de contrôle 10 fixé à l'extrémité du bras par l'intermédiaire de l'ensemble d'accrochage 12 est mis en place par le bras de manutention, de manière à venir s'engager autour de la partie inférieure de la manchette thermique 5, comme il sera expliqué ci-après.

La virole 11a du premier support annulaire 11 porte à sa partie supérieure, un ensemble de support annulaire 14 constitué d'une première pièce annulaire 14a fixée par des vis sur la virole lla et d'une seconde pièce annulaire 14b fixée par des vis sur la pièce annulaire 14a.

Une couronne dentée 15 est fixée par des vis sur la pièce annulaire 14b, dans une disposition coaxiale par rapport à l'ensemble de support 14 et à la virole 11a.

La couronne 15 comporte une denture 15a sur sa surface interne. Entre les pièces annulaires 14a et 15b on réalise la fixation par serrage de la bague externe d'un palier à billes 16 ayant une disposition coaxiale par rapport à l'ensemble 14 et à la virole 11a du support 11.

Le dispositif de contrôle 10 comporte un second support de forme tubulaire 18 constitué principalement par une virole 18a. Un fourreau 20 est fixé par des vis sur la surface externe de la virole 18a à sa partie supérieure.

Le fourreau 20 comporte une partie interne tubulaire fixée sur la virole 18a, une partie externe annulaire et une partie intermédiaire en forme de disque.

Entre la partie externe du fourreau 20 et une pièce annulaire 21 est intercalée et fixée la bague interne du palier à billes 16 assurant le montage du second support 18 à l'intérieur du premier support 11, dans une disposition coaxiale et de manière que le second support 18 soit mobile en rotation autour de son axe à l'intérieur du premier support 11.

Le fourreau 20 porte également trois ensembles de guidage à bras pivotants 22a, 22b, 22c montés à 120° les uns des autres autour de l'axe commun aux supports 11 et 18 et qui peuvent être actionnés par des vérins tels que le vérin 23 représenté sur la figure 2A dont le corps est monté oscillant par l'intermédiaire d'un support 19 solidaire de deux tiges de suspension non représentées fixées sur le fourreau 20.

Dans sa position de service, telle que représentée sur les figures 2A, 2B et 3, le dispositif 10 est placé par le bras de manutention dans une disposition telle que le second support tubulaire 18 ou support interne soit engagé sur la partie d'extrémité 5e de la manchette thermique 5, dans une disposition parfaitement coaxiale par rapport à la manchette 5 et à l'adaptateur 3.

Le second support 18 peut être entraîné en rotation autour de l'axe 25 commun au premier et au second supports et à l'adaptateur 3, par un motoréducteur 24 fixé sur la partie centrale en forme de disque du fourreau 20.

L'arbre de sortie 24a du motoréducteur 24 porte un pignon 26 calé sur l'arbre 24a. Le pignon 26 engrène avec la denture 15a de la couronne dentée 15, de manière que la rotation du motoréducteur 24 entraîne le déplacement en rotation du fourreau 20 et de l'ensemble du support 18 autour de l'axe 25 à l'intérieur du support externe 11 fixé à l'extrémité du bras de manutention.

Le fourreau 20 porte également sur sa partie externe un joint à lèvre 27 disposé de manière coaxiale par rapport au support 18 et au support 11 dont la lèvre vient frotter pendant la rotation du second support 18 à l'intérieur du premier support 11, sur la partie inférieure de la couronne dentée 15.

On va maintenant décrire, en se reportant aux figures 2A et 3, le dispositif de guidage 22a à bras pivotant, les dispositifs 22b et 22c étant identiques au dispositif 22a.

Le dispositif 22a comporte un bras 30 solidaire d'un axe de rotation 31 monté rotatif dans une disposition horizontale à l'intérieur d'une chape 29 fixée par des vis sur la partie intermédiaire en forme de disque du fourreau 20.

Le vérin 23 comporte une tige 28 dont la partie d'extrémité 28a constitue une chape reliée de manière articulée par un axe parallèle à l'axe 31, au bras 30. Le vérin 23 permet de déplacer le bras 30 entre une position de service représentée en traits pleins sur la figure 2 et une position hors service 30' représentée en traits interrompus.

Le bras 30 porte à son extrémité deux galets 33 et 34 montés rotatifs sur le bras 30 autour d'axes perpendiculaires entre eux.

Dans la position de service du bras 30, le galet 33 de forme cylindro-tronconique vient en contact par sa partie cylindrique avec la surface extérieure de l'extrémité 3a de l'adaptateur 3. Le galet 34 de forme cylindrique vient en contact avec l'extrémité inférieure horizontale de l'adaptateur 3.

Les bras 22a, 22b et 22c maintenus en position rabattue de service par les vérins tels que 23 assurent un guidage parfait du second support 18 lors de son déplacement en rotation à l'intérieur du premier support 11.

La partie supérieure du dispositif de contrôle constituée par les galets de guidage 33 et 34 est maintenue en contact avec la partie inférieure de l'adaptateur, par l'intermédiaire du bras de manutention.

Les bras pivotants tels que 30 du dispositif de guidage sont traversés par des ouvertures, leur réalisation sous forme ajourée permettant de limiter la masse de ces bras.

Le corps du vérin 23 porte un support de détecteur 36 à sa partie inférieure sur lequel sont montés deux détecteurs 37a et 37b permettant de détecter la présence de repères métalliques portés par un prolongement 28a de la tige 28 du vérin.

On peut ainsi détecter à distance si les bras des dispositifs de guidage 22a, 22b et 22c sont dans leur position relevée hors service ou dans leur position de service, le contact avec la partie d'extrémité de l'adaptateur pouvant être repéré par des détecteurs 80 (fig.3).

On va maintenant décrire, en se reportant aux figures 2A, 2B, 4, 4A, 4B, 5, 5A et 6, les moyens de guidage et de déplacement de la lame souple portant à son extrémité un capteur du type à courants de Foucault.

La virole 18a du second support 18 porte à son extrémité inférieure, une ceinture 40 sur laquelle repose la partie inférieure d'un support de glissière 41 fixé par des vis sur la ceinture 40.

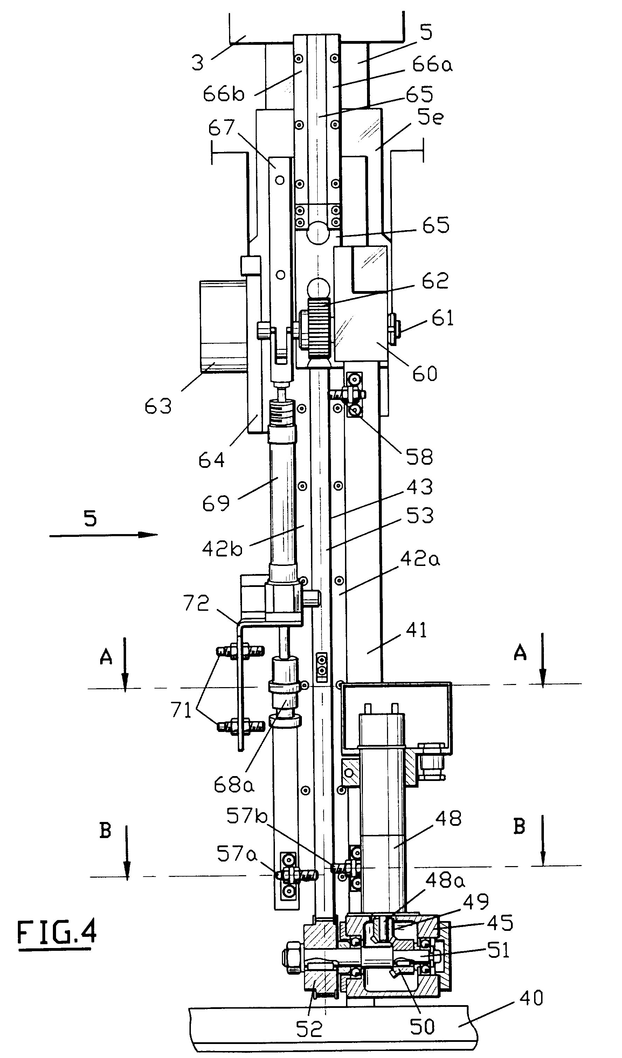

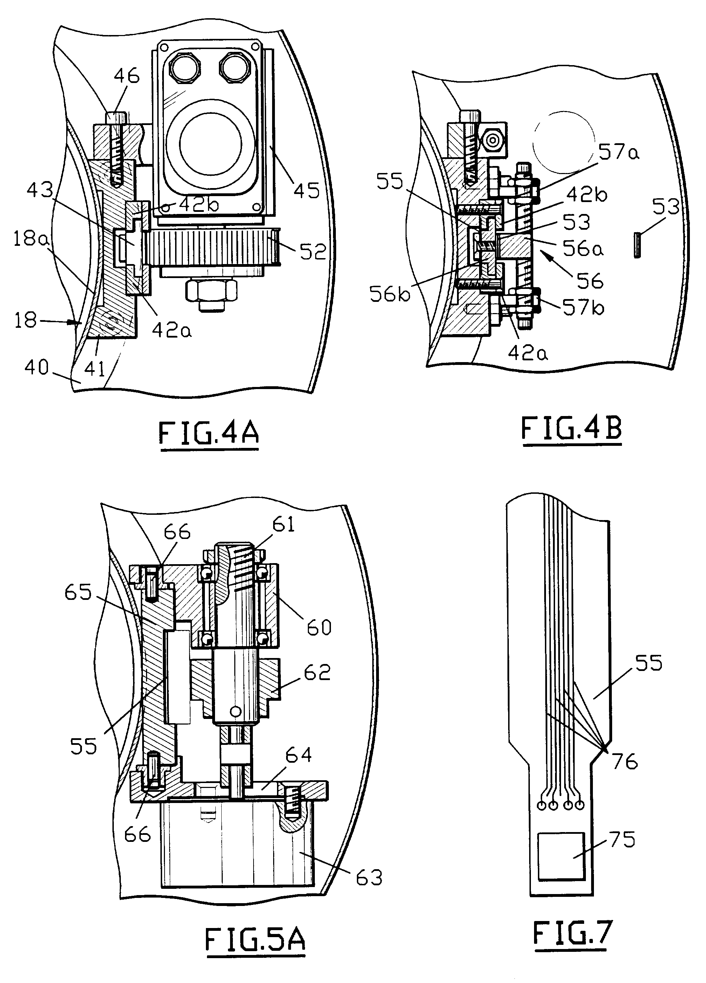

Comme il est visible sur la figure 4A, le support de glissière 41 porte deux glissières latérales 42a et 42b délimitant entre elles et avec des pièces de fermeture, une rainure de guidage verticale 43 disposée suivant la direction des génératrices de la virole 18a du support 18.

Un support de moteur 45 est fixé par des vis 46 sur le support de guidage 41. Sur le support 45 est fixé un motoréducteur 48 dont l'axe de sortie 48a porte un pignon conique 49 engrènant avec un second pignon conique 50 calé sur un arbre 51 monté rotatif dans le support de moteur 45, par l'intermédiaire de paliers à roulements.

L'axe 51 porte une poulie dentée 52 sur laquelle passe une courroie dentée 53 d'entraînement de la lame souple portant le capteur à courants de Foucault, la lame souple 55 et la courroie dentée 53 étant solidarisées par une pièce de liaison 56 constituant un chariot de guidage de la courroie et de la lame souple, entre les glissières 42a et 42b.

Le chariot 56 assurant la liaison entre la courroie dentée 53 et la lame souple 55 ainsi que le guidage de la lame souple entre les glissières 42a, 42b a été représenté sur la figure 4B.

Le chariot 56 comporte deux pièces 56a et 56b fixées l'une sur l'autre par des vis, entre lesquelles est serrée la courroie dentée 53.

La lame souple 55 est fixée sur la pièce 56b, par les vis assurant l'assemblage des pièces 56a et 56b et le serrage de la courroie 53. La pièce 56a en saillie vers l'extérieur permet d'assurer le repérage des positions extrêmes de la courroie et de la lame souple, grâce à des détecteurs de positions 57a et 57b disposés au voisinage de la partie inférieure de la rainure 43 et un détecteur 58 disposé à la partie supérieure de la rainure 43 entre les pièces de guidage 42a et 42b.

Les glissières 42a et 42b assurent le guidage de la pièce 56a du chariot et de la lame souple 55 fixée sur la pièce 56b.

Le support de glissières 41 solidaire du second support 18 porte au voisinage de sa partie supérieure, un support de palier 60 dans lequel est monté un axe 61 par l'intermédiaire de paliers à billes.

Sur l'axe 61 est fixée la poulie dentée 62 constituant la poulie de renvoi de la courroie dentée 53 entraînée par le motoréducteur 48.

Le support 41 porte, par l'intermédiaire d'une bride 64, un codeur 63 qui est entraîné en rotation par l'axe 61 lui-même entraîné en rotation par l'intermédiaire de la poulie 62 et de la courroie 53, pendant les déplacements de la lame souple entraînée par le motoréducteur 48 et la courroie 53.

Le codeur 63 permet de déterminer le déplacement de la courroie 53 de manière très précise, ce qui permet de connaître la position de la lame souple et du capteur à courants de Foucault disposé à l'extrémité de cette lame souple pendant son déplacement pour réaliser le contrôle à l'intérieur de l'adaptateur 3.

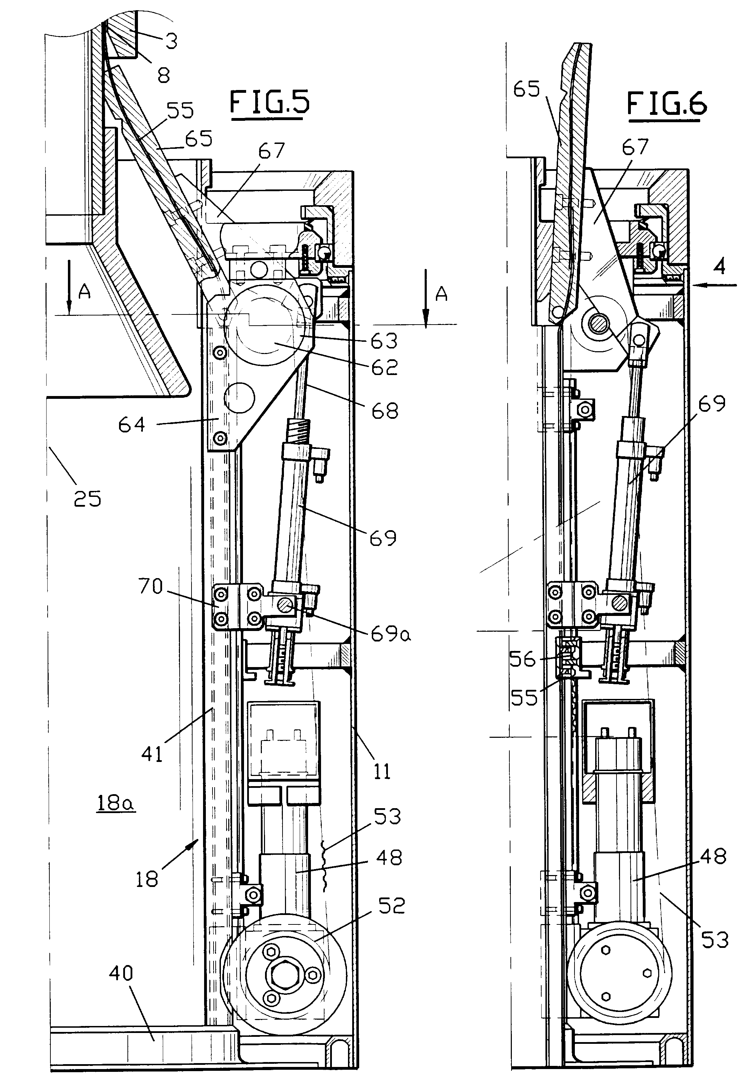

Une pièce de guidage 65 de la lame souple 55 est montée pivotante par l'intermédiaire d'axes 66 (figure 5A), entre le support de palier 60 et le support de codeur 64.

La pièce de guidage pivotante 65 porte des glissières 66a et 66b dans le prolongement des glissières 42a et 42b.

La pièce de guidage 65 est solidaire d'un bras d'actionnement 67 à l'extrémité duquel est fixée de manière articulée, par l'intermédiaire d'une chape, la tige 68 d'un vérin 69 monté articulé autour d'un axe horizontal 69a, dans un support 70 en deux parties fixé par des vis sur le support de guidage 41.

La pièce de guidage mobile 65 peut être déplacée, par l'intermédiaire du bras 67 et du vérin 69, entre une position de service représentée sur la figure 5 et une position hors service représentée sur la figure 6.

Les positions correspondantes du vérin sont repérées par des détecteurs 71 portés par un support 72 solidaire de la partie inférieure du corps du vérin en vis-à-vis desquels se déplacent des repères en saillie solidaires d'une partie terminale 68a de la tige du vérin 69.

Dans sa position de service, la pièce mobile de guidage 65 est en appui par sa partie d'extrémité sur l'extrémité saillante de la chemise 5, à l'extérieur de l'adaptateur 3.

La pièce de guidage 65 assure le guidage de la lame souple 55 constituant le support de la sonde de détection à courants de Foucault, dans le prolongement de l'espace annulaire 8 de l'adaptateur 3.

Pour assurer la continuité du guidage de la lame souple 55 entre les glissières 42a et 42b et la pièce de guidage 65, on fixe une lame souple à l'une de ses extrémités sur les parties d'extrémité des glissières 42a et 42b et à son autre extrémité sur la pièce 65, cette lame souple étant susceptible de subir une flexion pendant le déplacement de la pièce mobile 65 et de ménager un espace de guidage pour assurer la continuité du passage de la lame souple 55 de déplacement de la sonde.

La lame souple 55 portant la sonde de mesure peut être déplacée entre une position de retrait à l'intérieur des glissières 42a et 42b et une position extraite, par mise en rotation du motoréducteur 48 entraînant la courroie dentée 53 solidaire de la lame souple 55.

Dans sa position extraite, la lame souple 55 est guidée par la pièce de guidage mobile 65 en position de service, comme représenté sur la figure 5, jusqu'à l'entrée de l'espace annulaire 8 entre l'adaptateur 3 et la chemise 5.

Le déplacement ultérieur de la courroie 53 et de la lame souple 55 permet d'introduire la lame souple 55 à l'extrémité de laquelle est fixée la sonde à courants de Foucault dans l'espace annulaire 8 jusqu'au niveau choisi pour réaliser le contrôle de l'adaptateur 3.

De préférence, la lame souple 55 représentée sur la figure 7 est constituée par une bande en matériau composite ou un stratifié constitué par des lames en acier inoxydable ; à l'extrémité de la lame souple 55 sont fixées des bobines d'induction permettant de réaliser les mesures par courants de Foucault.

Des conducteurs électriques 76 sont disposés suivant la longueur de la lame souple 55 de manière à assurer l'alimentation en courant électrique des bobines de mesure par courants de Foucault et à récupérer les signaux de mesure provenant des bobines.

Les conducteurs électriques d'alimentation et de récupération des signaux de mesure sont reliés, par l'intermédiaire de connecteurs, à des câbles d'alimentation et de mesure qui permettent de réaliser l'alimentation des sondes et l'exploitation des mesures à distance.

De même, les moyens moteurs de déplacement des supports du dispositif de contrôle, de la lame souple et de la pièce de guidage mobile sont alimentés et commandés à distance.

Les capteurs de position et les codeurs permettant de repérer les positions exactes des éléments du dispositif de contrôle et la position de la sonde sont reliés par des câbles à un poste de contrôle qui peut être éloigné du couvercle de cuve sur lequel on réalise le contrôle.

On va maintenant décrire, en se référant à l'ensemble des figures, une opération de contrôle à l'intérieur d'un adaptateur 3 traversant le couvercle de la cuve d'un réacteur nucléaire qui est démonté et qui est placé sur un stand de contrôle.

Le dispositif de contrôle 10 suivant l'invention est fixé à l'extrémité d'un bras de manutention qui est introduit par des moyens de déplacement, à l'intérieur d'une enceinte ménagée en-dessous du couvercle de la cuve et comportant une paroi latérale de fermeture.

La mise en place du dispositif 10 autour de la partie d'extrémité de la manchette thermique 5 de l'adaptateur dans lequel on réalise le contrôle est réalisée en assurant une visualisation sous le couvercle de la cuve grâce à une caméra vidéo portée par le bras de manutention.

Le dispositif 10 est engagé autour de la partie inférieure de la chemise thermique 5, comme représenté sur la figure 2.

Les dispositifs de guidage par roulement 22a, 22b, 22c sont placés en position rabattue en actionnant les vérins tels que 23.

On assure une mise en contact des éléments de roulement 33 et 34 des dispositifs de guidage 22a, 22b et 22c en réglant la position du bras de manutention.

On alimente le vérin 69, de manière à placer la pièce de guidage mobile 65 dans sa position rabattue de service.

On alimente le motoréducteur 48, dans le sens de l'extraction de la lame souple 55 du sabre de déplacement de la sonde à courants de Foucault.

Le déplacement de la lame souple 55 est poursuivi jusqu'à ce que les codeurs de contrôle du déplacement aient repéré une amplitude de déplacement correspondant à une position déterminée de la sonde dans la zone de mesure.

On déplace la lame souple 55 sur la hauteur voulue correspondant à la longueur axiale de la zone à contrôler dans la direction des génératrices de l'adaptateur, en alimentant le motoréducteur 48, de manière à faire tourner la poulie d'entraînement de la courroie dentée 53. On réalise ainsi le contrôle suivant une première zone dans la direction des génératrices de l'adaptateur.

Avant d'effectuer un nouveau déplacement de la lame et de la sonde dans la direction axiale, on met en rotation le support 18 à l'intérieur du support 11, par l'intermédiaire du motoréducteur 24 de façon à le déplacer d'un pas. On effectue le contrôle sur toute la hauteur de la zone de l'adaptateur à contrôler.

On fait la mesure pas à pas suivant des génératrices de l'adaptateur et de manière à couvrir la surface interne de l'adaptateur sur toute sa périphérie.

On effectue ainsi un balayage de la surface intérieure de l'adaptateur 3, dans la zone de mesure, sur toute la longueur de cette zone et sur toute la périphérie interne de l'adaptateur. La position et les déplacements du support 18 à l'intérieur du support 11 sont repérés et suivis de manière très précise grâce à un codeur 73 fixé sur le fourreau 20 du support 18 et entraîné en rotation par un pignon 73a engrènant avec la couronne dentée 15 du support fixe 11.

Les déplacements et la position de la lame souple 55 et de la sonde de mesure dans la direction axiale de l'adaptateur sont eux-mêmes suivis de manière très précise par l'intermédiaire du codeur de position 63 associés aux moyens de déplacement de la courroie dentée 53.

On connaît donc à tout instant la position de la sonde de mesure et les défauts éventuels repérés sur la surface intérieure de l'adaptateur peuvent être localisés de manière précise.

Le dispositif suivant l'invention permet de réaliser le contrôle sans démontage et sans usinage de la manchette thermique de l'adaptateur.

Toutes les opérations peuvent être réalisées à distance.

L'invention ne se limite pas au mode de réalisation qui a été décrit.

C'est ainsi qu'on peut imaginer des moyens de guidage et de déplacement du second support à l'intérieur du premier support fixe d'un type différent de ceux qui ont été décrits.

On peut également imaginer l'utilisation de moyens différents pour réaliser le déplacement de la lame souple dans la direction axiale de l'adaptateur.

La lame souple du sabre peut être réalisée en un matériau différent d'un matériau composite et la sonde fixée sur la lame souple peut être différente d'une sonde à courants de Foucault.

## Revendications

1. Dispositif de contrôle de la surface intérieure d'une pièce tubulaire (3) de traversée du couvercle (1) de la cuve d'un réacteur nucléaire refroidi par de l'eau sous pression, fixée par une soudure sur le couvercle de la cuve, à l'intérieur de laquelle une manchette thermique (5) est montée dans une disposition coaxiale avec un jeu radial (8), la pièce tubulaire (3) comportant une partie d'extrémité inférieure (3a) saillante en-dessous du couvercle (1) placé en position de contrôle après démontage et la manchette thermique (5) présentant une partie d'extrémité (5e) saillante par rapport à la partie d'extrémité inférieure de la pièce tubulaire (3), caractérisé par le fait qu'il comporte :
- un premier support (11) de forme tubulaire portant sur sa surface externe des moyens de fixation (12, 13) à un outil de manutention mobile (17) assurant un déplacement dans une direction quelconque de l'espace,
- un second support (18) de forme tubulaire dont le diamètre intérieur est supérieur au diamètre de la partie saillante (5e) de la manchette thermique (5) monté en position coaxiale et rotatif autour de son axe à l'intérieur du premier support (11),
- au moins trois bras (30) montés pivotants sur le second support (18) autour d'un axe d'articulation (31) perpendiculaire à l'axe (25) du second support (18) portant des moyens de roulement (33, 34),
- des moyens moteurs (24, 26) de mise en rotation du second support (18) autour de son axe,
- une lame souple (55) portant une sonde de contrôle à l'une de ses extrémités,
- des moyens de support et de guidage (42a, 42b, 65) de la lame souple (55) portés par le second support (18) disposés et fixés sur le second support (18) dans une direction sensiblement parallèle à son axe (25), comportant une partie d'extrémité (65) montée pivotante autour d'un axe (66) perpendiculaire à l'axe du second support (18),
- des moyens de déplacement (48, 49, 50, 52) de la lame (55) en translation suivant la direction axiale des moyens de guidage,
- des moyens de déplacement (23) des bras pivotants (30),
- et des moyens de rabattement de la partie d'extrémité (65) des moyens de guidage de la lame souple (55) en position de service,
l'outil de manutention (17) permettant de mettre le dispositif dans une position de service dans laquelle le second support entoure l'extrémité inférieure de la pièce tubulaire.

2. Dispositif suivant la revendication 1, caractérisé par le fait que le premier support (11) comporte une virole (11a) à l'une des extrémités de laquelle est fixé un ensemble annulaire de support de la bague externe d'un palier à roulement (16) et d'une couronne dentée (15) disposés coaxialement par rapport au support annulaire (11).

3. Dispositif suivant la revendication 2, caractérisé par le fait que le second support (18) comporte une virole (18a) sur l'une des extrémités de laquelle est fixé un fourreau (20) comportant une partie interne fixée sur la virole (18a) du support (18), une partie externe de support et de fixation de la bague interne du palier à roulement (16) et une partie intermédiaire de support des bras pivotants (30) et d'un moteur (24) comportant un arbre de sortie (24a) sur lequel est fixé un pignon (26) engrènant avec la denture interne (15a) de la couronne (15).

4. Dispositif suivant la revendication 3, caractérisé par le fait que les bras pivotants (30) sont reliés de manière articulée à l'extrémité de la tige (28) d'un vérin (23) relié au second support (18).

5. Dispositif suivant l'une quelconque des revendications 1 à 4, caractérisé par le fait que les bras (30) portent à l'une de leurs extrémités, deux galets de roulement (33, 34) comportant des axes perpendiculaires entre eux et destinés à venir en contact dans une position rabattue de service des bras (30), avec la surface latérale extérieure et avec une extrémité inférieure de la pièce tubulaire (3).

6. Dispositif suivant l'une quelconque des revendications 1 à 5, caractérisé par le fait que la sonde de contrôle (75) fixée à l'extrémité de la lame souple (55) est une sonde à courants de Foucault.

7. Dispositif suivant l'une quelconque des revendications 1 à 6, caractérisé par le fait que les moyens de support et de guidage de la lame souple (55) sont constitués par des glissières (42a, 42b) fixées sur la surface externe du second support tubulaire (18).

8. Dispositif suivant la revendication 7, caractérisé par le fait que les moyens de déplacement de la lame (55) en translation suivant la direction axiale des moyens de guidage sont constitués par une courroie dentée (53) sur laquelle est fixée la lame souple (55), dans une direction longitudinale de la courroie (53), une poulie dentée (52) fixée sur l'arbre de sortie d'un ensemble motoréducteur (48, 49, 50) porté par le second support (18) et une poulie dentée de renvoi (62) montée rotative sur le second support (18), dans une position espacée suivant la direction axiale du second support (18) par rapport à la poulie motrice (52), la courroie dentée (53) constituant une courroie sans fin enroulée sur les poulies (52, 62).

9. Dispositif suivant l'une quelconque des revendications 1 à 8, caractérisé par le fait que les moyens de rabattement de la partie d'extrémité (65) des moyens de guidage de la lame souple (55) en position de service, sont constitués par un vérin (69) dont la tige (68) est reliée de manière articulée à un bras (67) solidaire de la partie d'extrémité (65) des moyens de guidage et dont le corps est relié au second support (18).

10. Procédé de contrôle de la surface intérieure d'une pièce tubulaire de traversée du couvercle de la cuve d'un réacteur nucléaire refroidi par de l'eau sous pression en utilisant un dispositif suivant l'une quelconque des revendications 1 à 9, caractérisé par le fait qu'on place le couvercle (1) de la cuve sur un stand d'intervention comportant une paroi latérale en-dessous du couvercle (1) de la cuve,
- qu'on fixe le dispositif de contrôle (10) à l'extrémité d'un bras de manutention (17),
- qu'on déplace le bras de manutention jusqu'à une position à l'aplomb du couvercle à l'intérieur de la paroi latérale du stand,
- qu'on déplace le dispositif (10) fixé à l'extrémité du bras de manutention pour le placer dans une disposition coaxiale à la pièce tubulaire de traversée (3) et à engager le second support tubulaire (18) autour de la partie inférieure (5e) de la manchette thermique (5) de la pièce tubulaire (3),
- qu'on place la partie d'extrémité (65) des moyens de guidage de la lame souple (55) dans sa position rabattue de service dans laquelle cette partie d'extrémité vient en appui sur la surface latérale de la partie inférieure de la manchette (5),
- qu'on déplace la lame souple (55) pour introduire la sonde fixée à son extrémité dans l'espace annulaire (8) entre la manchette (5) et la pièce tubulaire (3),
- qu'on déplace la lame souple (55) suivant la direction des génératrices de l'adaptateur (3) pour réaliser le contrôle de la paroi de l'adaptateur (3) sur toute la longueur d'une zone à contrôler dans la direction des génératrices de l'adaptateur (3),
- qu'on fait tourner le second support tubulaire (18) à l'intérieur du premier support tubulaire (11) pour le déplacer d'un pas en rotation,
- qu'on effectue un nouveau contrôle de la paroi de l'adaptateur suivant une zone à contrôler dans la direction des génératrices de l'adaptateur (3), et
- qu'on réalise pas par pas le contrôle de la surface de l'adaptateur (3) sur toute sa périphérie.

## Patentansprüche

1. Vorrichtung zum Überprüfen der Innenfläche eines rohrförmigen Teils (3) zum Durchqueren des Deckels (1) des Behälters eines mittels Druckwasser gekühlten Kernreaktors, das durch eine Schweißnaht am Deckel des Behälters befestigt ist, in dessen Inneren eine Wärmemanschette (5) in einer koaxialen Anordnung mit einem radialen Spiel (8) angebracht ist, wobei das rohrförmige Teil (3) einen unteren Endabschnitt (3a) aufweist, der unter den Deckel (1) vorspringt, der in Überprüfungsposition nach Demontage angebracht ist, und wobei die Wärmemanschette (5) einen Endabschnitt (5e) aufweist, der bezüglich des unteren Endabschnitts des röhrförmigen Teils (3) vorspringt, dadurch gekennzeichnet, daß sie aufweist:
- eine erste Stütze (11) von rohrförmiger Gestalt, die an ihrer Außenfläche Befestigungseinrichtungen (12, 13) an ein bewegliches Haltewerkzeug (17) trägt, das eine Bewegung in jedwede Richtung des Raumes sicherstellt,
- eine zweite Stütze (18) von rohrförmiger Gestalt, deren Innendurchmesser größer ist als der Durchmesser des vorspringenden Endabchnitts (5e) der Wärmemanschette (5), die koaxial und drehbar um ihre Achse im Inneren des ersten Trägers (11) angeordnet ist,
- wenigstens drei Arme (30), die schwenkbeweglich auf der zweiten Stütze (18) um eine Gelenkachse (31) senkrecht zur Achse (25) der zweiten Stützte (18) angebracht sind, die Rolleneinrichtungen (33, 34) trägt,
- Antriebseinrichtungen (24, 26) zum In-Drehung-Versetzen der zweiten Stütze (18) um ihre Achse,
- eine biegsame Lasche (55), die eine Steuer- bzw. Kontrollsonde an einem ihrer Enden trägt,
- Einrichtungen zum Stützen und Führen (42a, 42b, 65) der biegsamen Lasche (55), die durch die zweite Stütze (18) getragen werden, die auf der zweiten Stütze (18) in einer Richtung im wesentlichen parallel zu ihrer Achse (25) angeordnet und befestigt sind, mit einem Endabschnitt (65), der schwenkbeweglich um eine Achse (66) senkrecht zur Achse der zweiten Stütze (18) angebracht ist,
- Bewegungseinrichtungen (48, 49, 50, 52) der Lasche (55) in Translationsrichtung entlang der axialen Richtung der Führungseinrichtungen,
- Bewegungseinrichtungen (23) der Schwenkarme (30), und
- Einrichtungen zum Umschlagen des Endabschnitts (65) der Führungseinrichtungen der biegsamen Lasche (55) in Betriebsposition,
wobei das Halte- bzw. Betätigungswerkzeug (17) ermöglicht, die Vorrichtung in eine Betriebsposition zu setzen, in der die zweite Stütze das untere Ende des rohrförmigen Teils umgibt.

2. Vorrichtung nach Anspruch 1, dadurch gekennzeichnet, daß die erste Stütze (11) einen Mantel (11a) aufweist, an dessen einem der Enden eine ringförmige Stützanordnung des Außenringes eines Rollenlagers (16) und ein Zahnkranz (15) befestigt sind, die koaxial bezüglich der ringförmigen Stütze (11) angeordnet sind.

3. Vorrichtung nach Anspruch 2, dadurch gekennzeichnet, daß die zweite Stütze (18) einen Mantel (18), auf dessen einem Ende eine Stulpe (20) befestigt ist, die einen Innenabschnitt aufweist, der an dem Mantel (18a) der Stütze (18) befestigt ist, einen Außenabschnitt zur Stützung und Befestigung des Innenrings des Rollenlagers (16) und einen Zwischenabschnitt zum Stützen der Gelenkarme (30) und eines Motors (24) aufweist, der eine Austrittswelle (24a) aufweist, auf der ein Ritzel (26) befestigt ist, das in Eingriff mit dem inneren Zahnkranz (15a) des Zahnkranzes (15) ist.

4. Vorrichtung nach Anspruch 3, dadurch gekennzeichnet, daß die Schwenkarme (30) auf gelenkige Weise mit dem Ende der Stange (28) eines Stelltriebs (23) verbunden sind, der mit der zweiten Stütze (18) verbunden ist.

5. Vorrichtung nach einem der Ansprüche 1 bis 4, dadurch gekennzeichnet, daß die Arme (30) an einem ihrer Enden zwei Wälzlager (33, 34) aufweisen, die untereinander senkrechte Achsen aufweisen und dazu dienen, in einer umgeschlagenen Betriebsstellung der Arme (30) mit der Außenseitenfläche und mit dem unteren Ende des rohrförmigen Teils (3) in Kontakt zu kommen.

6. Vorrichtung nach einem der Ansprüche 1 bis 5, dadurch gekennzeichnet, daß die Steuersonde (75), die am Ende der biegsamen Lasche (55) befestigt ist, eine Sonde mit Foucault-Strom ist.

7. Vorrichtung nach einem der Ansprüche 1 bis 6, dadurch gekennzeichnet, daß die Einrichtungen des Stützens und Führens der biegsamen Lasche (55) aus Gleitschienen (42a, 42b) gebildet sind, die an der äußeren Oberfläche der zweiten rohrförmigen Stütze (18) befestigt sind.

8. Vorrichtung nach Anspruch 7, dadurch gekennzeichnet, daß die Bewegungseinrichtungen der Lasche (55) in Translationsrichtung entlang der axialen Richtung der Führungseinrichtungen durch einen Zahnriemen (53), auf dem die biegsame Lasche (55) befestigt ist, in einer Richtung längs des Riemens (53), einem Zahnrad (52), das auf der Austrittswelle eines Getriebes (48, 49, 50) befestigt ist, das von der zweiten Stütze (8) getragen wird, und einem Rücklaufzahnrad (62) gebildet werden, das drehbar auf der zweiten Stütze (18) angebracht ist, in einer entlang der axialen Richtung der zweiten Stütze (8) bezüglich des Antriebszahnrads (52) beabstandeten Position, wobei der Zahnriemen (53) einen Endlosriemen bildet, der um die Räder (52, 62) gewickelt ist.

9. Vorrichtung nach einem der Ansprüche 1 bis 8, dadurch gekennzeichnet, daß die Umschlageinrichtungen des Endabschnitts (65) der Führungseinrichtungen der biegsamen Lasche (55) in Betriebstellung aus einem Stelltrieb (69) gebildet werden, dessen Stange (68) auf gelenkige Weise mit einem Arm (67) verbunden ist, der mit dem Endabschnitt (65) der Führungseinrichtungen verbunden ist, und dessen Körper mit der zweiten Stütze (18) verbunden ist.

10. Verfahren zum Überprüfen der Innenfläche eines rohrförmigen Teils, das den Deckel des Behälters eines mittels Druckwasser gekühlten Kernreaktors durchquert, unter Verwendung einer Vorrichtung nach einem der Ansprüche 1 bis 9, dadurch gekennzeichnet, daß der Dekkel (1) des Behälters auf einen Eingreifstand plaziert ist, der eine Seitenwand unterhalb des Deckels (1) des Behälters aufweist,
- daß die Steuervorrichtung (10) am Ende eines Betätigungsarms (17) befestigt wird,
- daß der Betätigungsarm bis zu einer Position unterhalb des Deckels im Inneren der Seitenwand des Standes bewegt wird,
- daß die Vorrichtung (10), die am Ende des Betätigungsarms befestigt ist, bewegt wird, um die in eine koaxiale Position zum rohrförmigen Durchdringteil (3) zu setzen bzw. zu bringen, und um das zweite rohrförmige Stützteil (18) um den unteren Abschnitt (5e) der Wärmemanschette (5) des rohrförmigen Teils (3) in Eingriff zu bringen.
- daß der Endabschnitt (65) der Führungseinrichtungen der biegsamen Lasche (55) in seine umgeschlagene Betriebsposition gebracht wird, in der dieser Endabschnitt in Anlage an die seitliche Fläche des unteren Abschnitts der Manschette (5) kommt,
- daß die biegsame Lasche (55) zum Einführen der Sonde, die an ihrem Ende in dem rohrförmigen Raum (8) zwischen der Manschette (5) und dem rohrförmigen Teil (3) befestigt ist, bewegt wird,
- daß die biegsame Lasche (55) entlang der Richtung der Erzeugenden des Adapters (3) bewegt wird, um die Überprüfung der Seitenwand des Adapters (3) über die gesamte Länge einer zu kontrollierenden Zone in Richtung der Erzeugenden des Adapters (3) durchzuführen,
- daß die zweite rohrförmige Stütze (18) im Inneren der ersten rohrförmigen Stütze (11) gedreht wird, um sie um einen Drehschritt zu bewegen,
- daß eine neue Überprüfung der Seitenwand des Adapters entlang einer zu überprüfenden Zone in Richtung der Erzeugenden des Adapters (3) durchgeführt wird, und
- daß schrittweise die Überprüfung der Oberfläche des Adapters (3) über seinen gesamten Umfang bewerkstelligt wird.

## Claims

1. A device for inspecting the interior surface of a tubular member (3) passing through the head (1) of a nuclear reactor vessel cooled by pressurised water, secured by welding to the head of the vessel, within which a thermal sleeve (5) is mounted in a coaxial arrangement with radial play (8), the tubular member (3) comprising a lower end part (3a) which projects below the head (1) placed in an inspection position after removal and the thermal sleeve (5) having an end part (5e) which projects with respect to the lower end part of the tubular member (3), characterised in that it comprises:
- a first support (11) of tubular shape bearing on its outer surface means (12, 13) of attachment to a movable handling tool (17) ensuring movement in any direction in space,
- a second support (18) of tubular shape whose inner diameter is greater than the diameter of the projecting part (5e) of the thermal sleeve (5) mounted in a coaxial position so that it can rotate about its own axis within the first support (11),
- at least three arms (30) pivotally mounted on the second support (18) around a hinge axis (31) perpendicular to the axis (25) of the second support (18) bearing rolling means (33, 34),
- motor means (24, 26) for causing the second support (18) to rotate about its own axis,
- a flexible blade (55) carrying an inspection sensor at one of its ends,
- means (42a, 42b, 65) for supporting and guiding the flexible blade (55) carried by the second support (18) mounted on and fixed to the second support (18) in a direction substantially parallel to its axis (25), comprising an end part (65) which is pivotally mounted about an axis (66) perpendicular to the axis of the second support (18),
- means (48, 49, 50, 52) for moving the blade (55) in translation along the axial direction of the guiding means,
- means (23) for moving the pivoting arms (30),
- and means for lowering the end part (65) of the guiding means for the flexible blade (55) in the operating position,
- the handling tool (17) being capable of placing the device in an operating position in which the second support surrounds the lower end of the tubular part.

2. A device according to claim 1, characterised in that the first support (11) comprises a shell (11a) at one of the ends of which is fixed an annular assembly supporting the outer ring of a roller bearing (16) and a toothed ring (15) arranged coaxially with respect to the annular support (11).

3. A device according to claim 2, characterised in that the second support (18) comprises a shell (18a) on one of the ends of which is fixed a sleeve (20) comprising an inner part which is fixed to the shell (18a) of the support (18), an outer part of the support and fixing for the inner ring of the roller bearing (16) and an intermediate part supporting pivoting arms (30) and a motor (24) incorporating an output shaft (24a) to which is fixed a pinion (26) which meshes with the internal teeth (15a) of the ring (15).

4. A device according to claim 3, characterised in that the pivoting arms (30) are connected in a hinged way to the end of the rod (28) of a jack (23) connected to the second support (18).

5. A device according to any one of claims 1 to 4, characterised in that the arms (30) have at their ends two rollers (33, 34) with axes perpendicular to each other which are designed to come into contact with the outer lateral surface and a lower end of the tubular part (3) when the arms (30) are in a lowered operating position.

6. *A* device according to any one of claims 1 to 5, characterised in that the inspection sensor (75) fixed to the end of the flexible blade (55) is a sensor using Foucault currents.

7. A device according to any one of claims 1 to 6, characterised in that the means for supporting and guiding the flexible blade (55) comprise sliders (42a, 42b) fixed on the outer surface of the second tubular support (18).

8. A device according to claim 7, characterised in that the means for moving the blade (55) in translation along the axial direction of the guiding means comprise a toothed belt (53) to which the flexible blade (55) is fixed in a longitudinal direction of the belt (53), a toothed pulley (52) fixed on the output shaft from a motor/reduction gear assembly (48, 49, 50) carried on the second support (18) and a toothed return pulley (62) which is mounted so as to rotate on the second support (18), in an offset position with respect to the drive pulley (52) in the axial direction of the second support (18), the toothed belt (53) comprising an endless belt running around the pulleys (52, 62).

9. A device according to any one of claims 1 to 8, characterised in that the means for lowering the end part (65) of the means guiding the flexible blade (55) in the operating position comprise a jack (69) whose rod (68) is connected in a hinged way to an arm (67) which is of one piece with the end part (65) of the guiding means and whose body is connected to the second support (18).

10. A process for inspecting the internal surface of a tubular member passing through the cover of the vessel of a nuclear reactor cooled by pressurised water using a device according to any one of claims 1 to 9, characterised in that the cover (1) of the vessel is placed on a working stand incorporating a lateral wall above the head (1) of the vessel,
- the inspection device (10) is attached to the end of a handling arm (17),
- the handling arm is moved into a position vertically below the head within the lateral wall of the stand,
- the device (10) fixed to the end of the handling arm is moved to place it in a position which is coaxial with the traversing tubular part (3) and engage the second tubular support (18) around the lower part (5e) of the thermal sleeve (5) of the tubular part (3),
- the end part (65) of the means for guiding the flexible blade (55) is placed in its lowered operating position in which this end part bears against the lateral surface of the lower part of the sleeve (5),
- the flexible blade (55) is moved to insert the sensor fixed at its end into the annular space (8) between the sleeve (5) and the tubular part (3),
- the flexible blade (55) is moved in the direction of the generatrices of the adaptor (3) to inspect the wall of the adaptor (3) over the entire length of an area which is to be inspected in the direction of the generatrices of the adaptor (3),
- the second tubular support (18) is caused to turn within the first tubular support (11) to move it by one step in rotation,
- further inspection of the wall of the adaptor is performed in an area which is to be inspected in the direction of the generatrices of the adaptor (3), and
- inspection of the surface of the adaptor (3) over its entire periphery is performed step by step.
